(19) Europäisches Patentamt
European Patent Office
Office européen des brevets

(11) **EP 3 923 015 A1**

(12) **EUROPÄISCHE PATENTANMELDUNG**

(43) Veröffentlichungstag:
**15.12.2021 Patentblatt 2021/50**

(51) Int Cl.:
*G01S 1/02* (2010.01)     *G01S 1/20* (2006.01)
*G01S 5/02* (2010.01)     *G01S 5/10* (2006.01)

(21) Anmeldenummer: **21189562.8**

(22) Anmeldetag: **27.10.2016**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **14.12.2015 DE 102015121724**

(62) Dokumentnummer(n) der früheren Anmeldung(en)
nach Art. 76 EPÜ:
**16787480.9 / 3 391 070**

(71) Anmelder: **Symeo GmbH
85579 Neubiberg (DE)**

(72) Erfinder:
• **VOSSIEK, Martin
90766 Fürth (DE)**

• **GULDEN, Peter
85435 Erding (DE)**
• **KIRSCH, Fabian
27619 Schiffdorf-Sellstedt (DE)**

(74) Vertreter: **Pfrang, Tilman
Meissner Bolte Patentanwälte
Rechtsanwälte Partnerschaft mbB
Widenmayerstraße 47
80538 München (DE)**

Bemerkungen:
Diese Anmeldung ist am 04-08-2021 als
Teilanmeldung zu der unter INID-Code 62 erwähnten
Anmeldung eingereicht worden.

(54) **SYSTEM UND VERFAHREN MIT ZUMINDEST DREI SIGNALE EMPFANGENDEN STATIONEN**

(57) Die Erfindung bezieht sich auf ein wellenbasiertes Verfahren, bei dem zumindest zwei Referenz-Stationen (1, 2) Signale (s1, s2; s3, s4) aussenden, wobei die Signale nahezu zeitgleich ausgesandt werden (S1, S2), im selben Frequenzbereich ausgesandt werden, durch ein Multiplexverfahren trennbar sind, wobei mindestens eine der sendenden Referenz-Stationen (1, 2) neben der Aussendung des eigenen Signals (s1, s2) auch mindestens ein von einer anderen Referenz-Station (2, 1) zeitgleich gesendetes Signal (s2, s1) empfängt und einen zeitlichen Versatz ($\tau$1) und/oder eine Phasenlage zwischen der eigenen Aussendung und dem Empfang hochgenau bestimmt und wobei zumindest eine und zumindest empfangende Station (7) die Signale (s3, s4) von mindestens zwei der Referenz-Stationen (1, 2) empfängt. Außerdem bezieht sich die Erfindung auf ein System und Stationen zum Durchführen des Verfahrens.

Fig. 2

EP 3 923 015 A1

# EP 3 923 015 A1

**Beschreibung**

Die Erfindung bezieht sich auf ein System und ein Verfahren mit zumindest drei Signale empfangenden Stationen. Die Erfindung betrifft insbesondere eine Anordnung und ein Verfahren zur Berechnung von Uhrzeitoffsets in Funksystemen bzw. zur Berechnung von Positionen.

Funkortungssysteme können auf unterschiedliche Messgrößen abheben. Für sich bekannte Messgrößen sind z.B. Winkelmessung, Laufzeitmessung oder Feldstärkemessungen. Dabei sind die Laufzeitmessungen (TOA - time of arrival) im Bereich hochgenauer Systeme stark vertreten. Allerdings ist aufgrund der sehr großen Geschwindigkeit des Lichtes eine äußerst genaue Synchronisation beteiligter Stationen erforderlich. Ansonsten führen schon geringe Zeitfehler zu großen Messfehlern in der Entfernung bei Systemen, welche Positionen bestimmen. Dadurch ist eine Synchronisation der Stationen eine wichtige Problemstellung, die eng mit Funkortung verknüpft ist. Das Problem wurde in der Vergangenheit zum Teil dadurch entschärft, dass nur Laufzeitunterschiede ausgewertet werden (TDOA - time difference of arrival). Damit wird zwar eine Ortungsgenauigkeit je nach Situation reduziert, aber eine genaue Synchronisation zwischen einer mobilen Station und ortsfesten Stationen ist nicht mehr erforderlich.

Das verbleibende Problem, die ortsfesten Stationen untereinander zu synchronisieren, wurde in der Vergangenheit auf verschiedene Weisen gelöst:

- Ein Verfahren besteht darin, dass ein Glasfasernetzwerk eine Zeitreferenz systemweit verfügbar macht.
- Ein anderes Verfahren besteht darin, dass ein zusätzlicher "mobiler" Knoten an einem bekannten Ort fixiert wird. Aus der Messung der Laufzeiten zu diesem Knoten und den bekannten Abständen werden die Uhrenabweichungen bestimmt.
- Noch ein anderes Verfahren besteht darin, dass in jedem Messzyklus eine der ortsfesten Stationen ein Synchronisationssignal aussendet. Die übrigen ortsfesten Stationen synchronisieren sich darauf.

Die erste Lösung ist sehr aufwändig in der Installation und teuer bei der Anfangsinvestition in das Glasfasernetz. Die anderen beiden Lösungen beruhen auf Grundannahmen, die die mögliche Genauigkeit beschränken:

- Zur Synchronisation verwendete Funkkanäle müssen eine freie Sichtverbindung haben.
- Zusätzlich auftretende Mehrwege müssen einen ausreichenden Pfadlängen-Unterschied haben, um mit der verfügbaren Bandbreite von der Sichtverbindung trennbar zu sein.
- Eine Länge der Sichtverbindung muss bekannt sein.
- Uhren der ortsfesten Stationen werden in einer Zeit zwischen Synchronisation und Messung als absolut gangtreu angenommen.
- Eine Übertragung eines Systemtaktes auf eine Signalerzeugung innerhalb einer Station wird als ideal und fehlerfrei angenommen.

Jede Abweichung von diesen idealisierten Annahmen hat einen Synchronisationsfehler und daraus folgend eine verfälschte Messung zur Folge. Eine systematische Abweichung von diesen Annahmen kann zu einem systematischen Messfehler führen, der auch durch nachfolgende statistische Ausgleichverfahren nicht behoben werden kann.

Ferner ist die durch bisherige Verfahren erreichte Genauigkeit nicht ausreichend, um Phasen-kohärente Messungen zu unternehmen.

Allgemein bekannt ist eine Vorsynchronisierung mit einer Genauigkeit, die es ermöglicht, verschiedene Sender im iFDMA zu trennen nach S. Roehr, M. Vossiek, P. Gulden, "Method for High Precision Radar Distance Measurement and Synchronization of Wireless Units," 2007 IEEE MTT-S International Microwave Symposium, Honolulu, USA, June 2007, pp. 1315-1318.

Die Aufgabe der Erfindung besteht darin, ein System und ein Verfahren mit zumindest drei Signale austauschenden Stationen weiter zu entwickeln. Insbesondere soll eine Mess-Genauigkeit, insbesondere eine zeitliche Genauigkeit der Messung von Signallaufzeiten im Funkkanal, verbessert werden.

Diese Aufgabe wird durch das Verfahren mit den Merkmalen des Anspruches 1 bzw. das System mit den Merkmalen des Anspruches 12 sowie entsprechende Stationen gelöst. Vorteilhafte Ausgestaltungen sind Gegenstand von abhängigen Ansprüchen.

Demgemäß bevorzugt wird ein wellenbasiertes Verfahren, bei dem zumindest zwei Referenz-Stationen Signale aussenden, wobei die Signale nahezu zeitgleich ausgesandt werden, im selben Frequenzbereich ausgesandt werden, durch ein Multiplexverfahren trennbar sind, wobei mindestens eine der Referenz-Stationen neben der Aussendung des eigenen Signals auch mindestens ein von einer anderen Referenz-Station zeitgleich gesendetes Signal empfängt und einen zeitlichen Versatz und/oder eine Phasenlage zwischen der eigenen Aussendung und dem Empfang hochgenau bestimmt und wobei zumindest eine und zumindest empfangende Station die Signale von mindestens zwei der Referenz-Stationen empfängt.

2

Unter wellenbasiert wird insbesondere verstanden, dass es sich um zwischen Stationen in Wellenform übertragene Signale handelt, welche in dem Verfahren bzw. einem entsprechenden System verwendet werden. Insbesondere handelt es sich um elektromagnetische Wellen als Signale, die bevorzugt leiterlos, d.h. ohne einen Wellenleiter über Luftschnittstellen übertragen werden.

Insbesondere dienen die Begriffe "Referenz-Station" und "empfangende Station" dazu, für den Verfahrensablauf unterschiedlich wirkende und arbeitende Stationen voneinander zu unterscheiden.

Bevorzugt sind ortsfeste Referenz-Stationen. Unter ortsfest werden hier insbesondere auch Referenz-Stationen verstanden, die sich auf bekannten Trajektorien bewegen. Solche Bewegungen erfolgen dabei insbesondere längs bekannter OrtsZeit-Profile, so dass zu jedem für Messungen relevanten Zeitpunkt die Position einschließlich räumlicher Ausrichtung einer solchen bewegbaren Referenz-Station bekannt ist.

Die zumindest eine und zumindest empfangende Station kann bevorzugt auch Signale selber aussenden und/oder mit den Referenz-Stationen kommunizieren, d.h. Signale einschließlich Daten und Informationen austauschen. Die empfangende Station ist insbesondere eine mobile Station. Bevorzugt kann sich eine solche mobile Station frei im Raum bewegen, wobei deren momentane Position einschließlich Ausrichtung nicht bekannt sein muss.

Signale können nur einen zeitlich vorgegebenen Verlauf aufweisen. Bevorzugt werden Signale in Form einer Rampe. Signale können alternativ oder zusätzlich auch Daten und Informationen enthalten, welche zwischen zwei oder mehr der verschiedenen Stationen ausgetauscht werden.

Unter ein Aussenden im selben Frequenzbereich fallen insbesondere alle Aussendungen einer Station, die bei niedrigerer Frequenz sind, während die einer anderen Station alle bei höherer Frequenz sind. Dies gilt insbesondere für eine Anordnung, bei der es keine denkbare konstante Trennfrequenz gibt.

Unter hochgenau wird insbesondere genauer als 1 μs verstanden. 1 μs lässt sich mit Standardverfahren, beispielsweise FSK oder mit ZigBee Modulen, aktuell erreichen, wobei für zukünftige Anwendungen auch eine höhere Anforderung an die Genauigkeit ermöglichen, insbesondere genauer als 0,1 μs, insbesondere genauer als 0,001 μs, z.B. durch eine Synchronisation.

Eine bevorzugte Ausgestaltung ist ein Verfahren, bei dem eine Rechen- und/oder Steuereinheit, die nicht Teil einer solchen empfangenden Stationen ist, zumindest eines von den festgestellten Zeitversätzen und Phasenlagen zu einem Datenstrom oder Datensatz verarbeitet, welcher der zumindest einen empfangenden Station durch Datenübertragung übertragen wird.

Die Datenübertragung kann dabei auch auf einem anderen Pfad und/oder Medium übertragen werden als die Signale bzw. Rampen.

Eine bevorzugte Ausgestaltung ist ein Verfahren, bei dem durch mindestens eine empfangende Station oder Referenz-Station zumindest eines von dem zeitlichen Versatz und der Phasenlage mindestens eines Signals, das von einer anderen Station einschließlich empfangender Station und Referenz-Stationen empfangenen wird oder wurde, bestimmt wird.

Das Bestimmen erfolgt insbesondere durch FMCW, OFDM, Pseudo-noise Codierung (Pseudo-Rausch-Kodierung).

Eine bevorzugte Ausgestaltung ist ein Verfahren, bei dem aus empfangenen Signalen bestimmte Messwerte von mindestens drei verschiedenen empfangenden Stationen so verrechnet werden, dass eine rechnerische Größe entsteht, auf die Systemzeiten dieser Stationen bei linear genäherter Betrachtung keinen Einfluss auf die Laufzeitdifferenzen aus den empfangenen Signalen haben.

Unter genäherter Betrachtung wird insbesondere verstanden, dass die Taylorreihe n bei quadratischem Glied abgebrochen wird. Das Verrechnen erfolgt insbesondere, indem Laufzeiten oder Phasen mit geeigneten Gewichten addiert und subtrahiert werden. Die rechnerische Größe sind insbesondere Weglängen und Weglängenunterschiede.

Bei genäherter Betrachtung wird gemäß einer dazu bevorzugten Ausgestaltung die Taylorreihe n bei quadratischem Glied abgebrochen, wobei das Verrechnen insbesondere erfolgt, indem Laufzeiten oder Phasen mit Gewichten addiert und subtrahiert werden und insbesondere die rechnerische Größe Weglängen und Weglängenunterschiede sind.

Eine bevorzugte Ausgestaltung ist ein Verfahren, bei dem aus empfangenen Signalen bestimmte / die Messwerte von mindestens drei verschiedenen empfangenden Stationen verrechnet werden gemäß:

$$\tau_{m,k_1,k_2}(t) = \left(\tau_{k_1 \to m}(t) - \tau_{k_2 \to m}(t)\right) + \frac{1}{2}\left(\tau_{k_2 \to k_1}(t) - \tau_{k_1 \to k_2}(t)\right)$$

$$(1.2)$$

Eine bevorzugte Ausgestaltung ist ein Verfahren, bei dem bei einem Einsatz von mehr als drei Stationen aus empfangenen Signalen bestimmte / die Messwerte von mindestens drei verschiedenen empfangenden Stationen verrechnet werden gemäß:

$$\begin{pmatrix} clk_1(t) + T_0 \\ clk_2(t) + T_0 \\ \vdots \\ clk_N(t) + T_0 \end{pmatrix} = A(t) \begin{pmatrix} \tau_{1->2}(t) \\ \tau_{1->3}(t) \\ \vdots \\ \tau_{2->1}(t) \\ \tau_{2->3}(t) \\ \vdots \\ \tau_{N->(N-1)}(t) \end{pmatrix}, \tag{1.5}$$

insbesondere gemäß:

$$clk_k(t) + T_0 = \frac{1}{2N}\left( \sum_{k' \neq k} \tau_{k'->k}(t) - \sum_{k' \neq k} \tau_{k->k'}(t) \right) \tag{1.7}$$

Eine bevorzugte Ausgestaltung ist ein Verfahren, bei dem ein Uhrenoffset der empfangenden Station relativ zu zumindest einer der Referenz-Stationen bestimmt wird.

Eine bevorzugte Ausgestaltung ist ein Verfahren, bei dem als die gesendeten Signale FMCW- oder FSCW-Signale verwendet oder gebildet werden.

Eine bevorzugte Ausgestaltung ist ein Verfahren, bei dem IFMDA oder CDMA als das Multiplexverfahren angewendet wird.

Eine bevorzugte Ausgestaltung ist ein Verfahren, bei dem abhängig von den festgestellten Zeitversätzen ($\tau$1) und/oder Phasenlagen zukünftige Aussendungen der Referenz-Stationen gesteuert werden.

Eine bevorzugte Ausgestaltung ist ein Verfahren, bei dem ein zeitgleiches oder nahezu zeitgleiches Aussenden als ein zeitlich überlappender Sendebetrieb oder Sendebetrieb zwischen zwei Aussendungen einer Station mit einer Ruhezeit kleiner als einer Dauer der Kanalimpulsantwort durchgeführt wird.

Eine bevorzugte Ausgestaltung ist ein wellenbasiertes System mit zumindest zwei Referenz-Stationen, die Signale aussenden und die jeweils zumindest eine Rechen- und/oder Steuereinheit aufweisen, und zumindest einer und zumindest empfangenden Station, die Signale von mindestens zwei der Referenz-Stationen empfängt und die zumindest eine Rechen- und/oder Steuereinheit aufweist, wobei die Rechen- und/oder Steuereinheiten ausgebildet oder eingerichtet sind, jeweils zumindest einen Teil von Verfahrensschritten des vorstehenden Verfahrens durchzuführen und in Gesamtheit das gesamte Verfahren durchführen.

Eine so ausgebildete oder eingerichtete Rechen- und/oder Steuereinheit ist insbesondere ein Prozessor mit zugehörigen Komponenten wie z.B. zumindest einem integrierten oder angeschlossenen Speicher zum Speichern oder Zwischenspeichern von Programmkode zur Verfahrensdurchführung und von Signalen und Daten dazu.

Eine bevorzugte Ausgestaltung ist eine Referenz-Station oder empfangende Station, die ausgebildet oder eingerichtet ist als Komponente eines solchen Systems oder die ausgebildet oder eingerichtet ist zum Durchführen eines solchen Verfahrens.

Eine bevorzugte Ausgestaltung ist eine solche empfangende Station, die eine mobile Station mit einer Bewegungsbahn ist, wobei die Bewegungsbahn insbesondere nicht festgelegt ist.

Eine bevorzugte Ausgestaltung ist eine Referenz-Station mit einer/der Rechen- und/oder Steuereinheit, die abhängig von den festgestellten Zeitversätzen und/oder Phasenlagen zukünftige Aussendungen der Referenz-Stationen Einfluss steuert.

Bereitgestellt wird so ein verbessertes Verfahren zur synthetischen Synchronisation von Pseudolites (deutsch: Funkbaken) in ITDOA- (ITDOA : Inverse Time Difference of Arrival, deutsch inverse Laufzeitdifferenzen der Eintreffzeitpunkt) Positionierungs-Systemen. Insbesondere werden ein System mit einer Anordnung aus Referenz-Stationen und mindestens einer mobilen Station sowie ein Verfahren zur Berechnung von Uhrzeitoffsets in Funksystemen bzw. zur Berechnung von Positionen mit deutlich verringertem Einfluss von Uhrzeitoffsets bereitgestellt. Ermöglicht werden außerdem Phasen-kohärente Messungen. Das System - insbesondere eine entsprechende Anordnung von Stationen - und das Verfahren zur Berechnung von Uhrzeitoffsets in Funksystemen bzw. zur Berechnung von Positionen ermöglichen einen deutlich verringerten Einfluss von Uhrzeitoffsets.

Das System und das Verfahren unterdrücken - abgesehen von der freien Sichtverbindung - die einleitend genannten Grundannahmen und ermöglichen somit eine deutliche Verbesserung bei einer Ortung. Durch das Verfahren entfällt die Notwendigkeit zur direkten hochgenauen Synchronisation. Sogar phasenkohärente Messungen werden ermöglicht.

Die beiden zuletzt genannten Grundannahmen werden dadurch erübrigt, dass dieselbe Aussendung sowohl für die Synchronisation als auch für die Ortung verwendet wird bzw. werden kann. Daher wird nicht die Relation der Systemtakte mittelbar durch Funksignale bestimmt und von dort auf die nächstfolgenden Signale geschlossen, sondern unmittelbar der zeitliche Bezug der verschiedenen für die Ortung relevanten Aussendungen ermittelt.

Die dritte Grundannahme, d.h. Bekanntheit der Länge der Sichtverbindung, wird dadurch erübrigt, dass der Zeitversatz zwischen zwei der Referenzstationen, gleichzeitig während derselben Aussendung von beiden Stationen simultan gemessen wird. Weicht nun die momentane Entfernung von der angenommenen Entfernung ab, so wirkt sich diese auf beide Zeitversatzmessungen genau gegensätzlich aus. Wenn die Gesamtauswertung zur Bestimmung der Uhrenfehler beide Messungen von der ersten zur zweiten Referenz-Station und umgekehrt gleich stark gewichtet so pflanzt sich der Fehler durch ungenaue Entfernungsannahmen in der Synchronisation nicht fort.

Die zweite Grundannahme, d.h. auftretende Mehrwege mit einem ausreichenden Pfadlängen-Unterschied, wird dadurch erübrigt, dass die Messung des Zeitversatzes zwischen zwei der Referenzstationen in beiden Richtungen zeitgleich mit derselben Mittenfrequenz vorgenommen wird bzw. werden kann. Kann ein Mehrweg in einer bestimmten Bandbreite nicht vom Hauptpfad getrennt werden, so kann er die scheinbare Weglänge des Hauptpfades sowohl verkürzen als auch verlängern.

Was in dem zuletzt genannten Fall, dass ein Mehrweg nicht vom Hauptfeld getrennt werden kann, geschieht und in welchem Ausmaß, das hängt von folgenden Größen ab:

- Einem genauen Weglängenunterschied zwischen Hauptpfad und Mehrweg,
- Einem Amplitudenverhältnis zwischen beiden Pfaden,
- Einer verwendeten Mittenfrequenz,
- Einer verwendeten Bandbreite,
- Einer spektralen Leistungsverteilung eines verwendeten RF-Signals (RF: Hochfrequenz) und
- Einer Wahl einer Fensterfunktion auf der Empfangsseite, d.h. insbesondere bei der empfangenden Station sowie den Referenz-Stationen während deren Empfang.

Jeder dieser Einflussfaktoren bzw. Größen wirkt bei entsprechender Verarbeitung an zwei Stellen, so dass die Gesamtwirkung sich im Endergebnis aufhebt. Die bekannten Einflüsse werden strukturell zunächst betrachtet und dann wird einzeln beschrieben, wie dafür gesorgt wird, dass es nicht ins Endergebnis durchschlägt. Dazu wird bevorzugt jeweils eine gleichstarke Wirkung auf die beiden Messungen derselben Strecke nachgewiesen.

Davon sind die beiden ersten Größen kanalabhängig. Bei gleichzeitiger Messung finden beide Messungen insbesondere im selben Kanal statt. Die dritte bis fünfte Größe werden für beide Messungen insbesondere gleich gewählt. Auf diese Weise ist die scheinbare Weglängenänderung für beide Messungen gleich stark und eine solche wirkt sich, wie zuvor gezeigt, nicht auf die bestimmten Uhrenabweichungen aus.

Für die gleichzeitige Messung mit mehreren sendenden Stationen wird ein geeignetes Multiplexverfahren verwendet. Nachfolgend werden beispielhaft verschiedene Verfahren bezüglich ihrer Anwendbarkeit bewertet:

Bei einem TDMA (time division multiple access / deutsch: multipler Zugriff mit Zeitaufteilung) senden die Stationen nicht absolut zeitgleich, sondern zeitlich gestaffelt. Damit die beiden zuerst genannten Größen sich im Kanal nicht zwischendurch ändern, wird das Anwendungsumfeld bewertet und eine zeitliche Staffelung ausreichend kurz gehalten. Gerade in beweglichen Szenarien wird dies selten gegeben sein, da es bei der ersten Größe schon auf Verschiebungen um Bruchteile der Wellenlänge ankommt. Ausreichend kurz bedeutet dabei, dass sich das System innerhalb der Zeit, in der die Messung zuerst in die eine und dann in die andere Richtung durchgeführt wurde, maximal um ein Zehntel der Wellenlänge bewegt hat.

Bei einem FDMA (frequency division multiple access / deutsch: multipler Zugriff mit Frequenzaufteilung) sind die Mittenfrequenzen soweit gegeneinander verschoben, dass die verwendeten Teilbänder sich nicht mehr überlappen. Damit verändert sich jedoch auch die Wellenlänge und dadurch wird die dritte Größe stark verändert. Damit ist die Verwendung von FDMA nicht bevorzugt. Für moderne Verfahren im Frequenzbereich wie beispielsweise OFDMA gelten diese Einschränkung jedoch nicht.

Bei einem OFDMA (orthogonal frequency division multiple access) werden verschiedene Träger eines OFDM-Systems verschiedenen Sendern exklusiv zugeordnet. Dadurch kann erreicht werden, dass die Aussendungen der Stationen im Frequenzbereich sehr fein verschachtelt sind. Eine Schachtelung wird fein genug gewählt, um für jeden Sender alle Merkmale des Kanals im Frequenzbereich sichtbar zu machen. Ansonsten würde die fünfte Größe verletzt werden. Eine fein genug gewählte Schachtelung ist insbesondere ein Schachtelung, bei der innerhalb eines Teilbandes eine Trägerfrequenz liegt. Das Teilband ist dabei so gewählt, das es max. dem inversen des Delayspread des Kanals entspricht. Unter Delayspread versteht man dabei auf Deutsch die Verzögerungsaufspreizung des Kanals.

Bei einer besonders bevorzugten IFDMA (intermediate Frequency division multiple access) werden z.B. FMCW Signale so variiert, dass sie im ZF Bereich (ZF: Zwischenfrequenz) der Empfänger in verschiedene Subbänder fallen. Dadurch sind die Signale trennbar, ohne eine der vorstehenden Größen zu beeinflussen.

Bei einer ebenfalls besonders bevorzugten CDMA (Code division Multiple Access) wird die Aussendung mit einer Stationsspezifischen breitbandigen Pseudo-Noise-Sequenz (Noise deutsch: Rauschen) gemischt. Durch erneute Mischung im Empfänger wird ein bestimmtes Signal wieder aus dem entstandenen Signal-Teppich herausgehoben. Dadurch sind die Signale trennbar, ohne eine der vorstehenden Größen zu beeinflussen.

Ein Ausführungsbeispiel wird nachfolgend anhand der Zeichnung näher erläutert. Gleiche Bezugszeichen in den verschiedenen der Figuren verweisen dabei auf gleiche oder gleich wirkende Komponenten, Signale oder Verfahrensschritte, so dass auch die Ausführungen zur jeweils anderen Figur heranziehbar sind. Es zeigen:

Fig. 1    eine Anordnung mit einer empfangenden Station und sechs ortsfesten Stationen und

Fig. 2    eine weitere Anordnung zur Veranschaulichung von Verfahrensschritten mit einer empfangenden Station und vier ortsfesten Stationen und

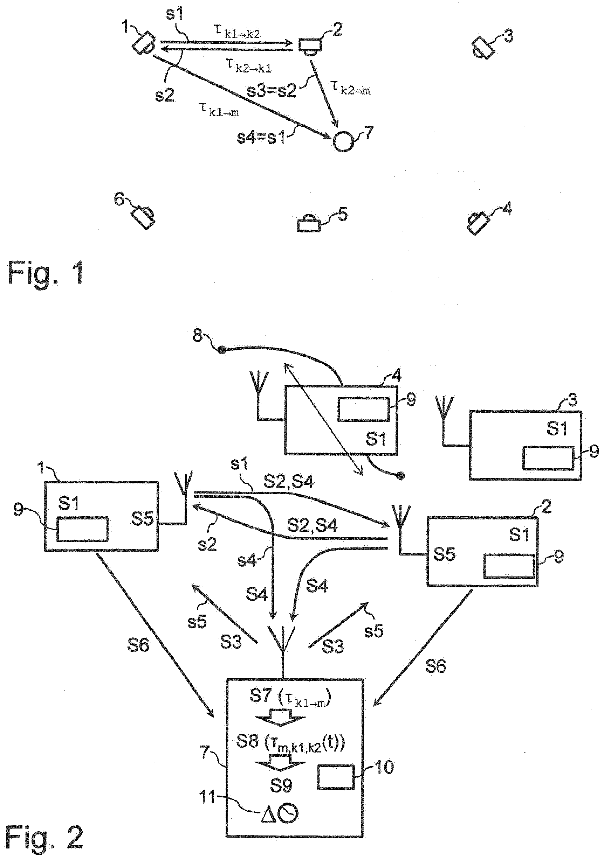

Wie aus Fig. 1 und Fig. 2 ersichtlich, hat eine beispielhafte Anordnung bzw. ein daraus gebildetes System zumindest zwei, hier z.B. sechs ortsfeste Stationen, die lediglich zur begrifflichen Unterscheidbarkeit auch als Referenz-Stationen 1 - 6 bezeichnet werden. Die erste der Referenz-Stationen 1 sendet insbesondere ein erstes Signal s1 an zumindest die zweite der Referenz-Stationen 2. Die zweite der Referenz-Stationen 1 sendet insbesondere ein zweites Signal s2 an zumindest die erste der Referenz-Stationen 1.

Von zumindest einer empfangenden Station 7 sind diese Signale s1, s2 der ersten Referenz-Station 1 bzw. der zweiten Referenz-Station 2 empfangbar und werden nach deren Empfang von dieser empfangenden Station 7 verwendet. Zur Unterscheidbarkeit werden dabei die von der empfangenden Station 7 empfangenen Signale s1, s2 auch mit den Bezugszeichen s3 bzw. s4 verwendet. Der Begriff empfangende Station 7 dient hier lediglich zur begrifflichen Unterscheidbarkeit gegenüber den Referenz-Stationen 1 - 6. Insbesondere kann die empfangende Station 7 auch selber als eine auch sendende Station ausgebildet sein. Insbesondere ist die empfangende Station 7 als eine mobile Station ausgebildet.

Zur Darstellung in Formeln werden die Referenz-Stationen 1 -6 auch mit den Buchstaben $k_1$, $k_2$, ... $k_6$ bezeichnet und die empfangende Station 7 mit m.

Nach Auswahl insbesondere eines der vorstehend bezeichneten Multiplexverfahren kann jede ortsfeste Referenz-Station k bzw. k1 - k6 und/oder mobile Station m laufend die in ihrem Empfangssignal festgestellten pseudo-Zeitversätze und Phasenlagen gegenüber allen ortsfesten, also sendenden Stationen k bestimmen. Dies sind hier z.B. $\tau_{k1 \to k2}$ als Zeitversatz zwischen den ersten beiden Stationen k1 und k2; Der Zeitversatz beinhaltet dabei Uhrenversatz zwischen den Stationen und die gemessene Laufzeit. $\tau_{k2 \to k1}$ als Zeitversatz in umgekehrter Senderichtung zwischen den ersten beiden Referenz-Stationen k2 und k1; $\tau_{k1 \to m}$ als Zeitversatz zwischen der ersten Referenz-Station k1 und der empfangenden Station m und $\tau_{k2 \to m}$ als Zeitversatz zwischen der zweiten Referenz-Station k2 und der empfangenden Station m. Entsprechendes gilt für die verschiedenen $\varphi_{k \to m}$ als Phase zwischen Stationen, z.B. k und m, und $\Delta\varphi_{k \to m}(t)$ als Phasendifferenz bzw. Phasenlage zwischen Stationen, z.B. k und m zur Zeit t.

Die Bestimmung erfolgt insbesondere gemäß

$$\tau_{k->m}(t) = clk_m(t) - clk_k(t) + c_0^{-1} d_{k,m}(t)$$

$$\Delta\varphi_{k->m}(t) = \varphi_{LO,m}(t) - \varphi_{LO,k}(t) + \frac{2\pi}{\lambda} d_{k,m}(t)$$

$$(1.1)$$

Dabei bezeichnet $d_{k,m}(t)$ einen ggf. durch Mehrwege gestörten Abstand im Funkkanal zwischen den Stationen k und m zu der Zeit t. Außerdem bezeichnet $clk_k(t)$ die Systemzeit innerhalb der Signalerzeugungseinheit der Station k zum Zeitpunkt t. Es bezeichnet $\varphi_{LO,k}(t)$ die Phasenlage des Lokaloszillators in einer Signalerzeugungseinheit der Station k zum Zeitpunkt t. Aus diesen Werten wird dann der Laufzeitunterschied zwischen den Pfaden $k_1$->m, $k_2$-> m zwischen der ersten Referenz-Station 1; k1 bzw. der zweiten Referenz-Station 2; $k_2$ einerseits und andererseits der empfangenden Station 7; m berechnen. Dies erfolgt insbesondere mittels

$$\tau_{m,k_1,k_2}(t) = \left(\tau_{k_1 \to m}(t) - \tau_{k_2 \to m}(t)\right) + \frac{1}{2}\left(\tau_{k_2 \to k_1}(t) - \tau_{k_1 \to k_2}(t)\right) \qquad (1.2)$$

Der Klammerterm ist eingeführt, um die durch unterschiedliche Uhren entstehenden Fehler je zur Hälfte einem der beiden Übertragungspfade zuzuordnen.

Wären die beteiligten Uhren ideal synchron, so wäre hier die erste Klammer bereits der gewünschte Laufzeitunterschied und die zweite Klammer ergäbe aufgrund der Kanalsymmetrie Null. Kommen nun die Abweichungen der realen Uhren ins Spiel, so zeigt sich, dass diese den Rechenwert nicht beeinflussen, da sich der Einfluss des Uhrenfehlers auf den ersten und den zweiten Term gerade aufhebt. Somit bildet der zweite Term immer die erforderlichen Korrekturen für Uhrenfehler im ersten Term. Der berechnete Wert $\tau_{m,k1,k2}(t)$ stellt schließlich den Abstandsunterschied der mobilen zu beiden ortsfesten Stationen - d.h. der empfangenden Station 7 und den Referenz-Stationen 1, 2; $k_1$, $k_2$ - dar, aber ohne Einfluss der beteiligten Uhren und der Kanaleigenschaften zwischen den beiden ortsfesten Stationen.

$$\tau_{m,k_1,k_2}(t) = c_0^{-1}\left(d_{k_1,m}(t) - d_{k_2,m}(t)\right) \qquad (1.3)$$

Mehrwege zwischen der mobilen Station 7; m und den ortsfesten Referenz-Stationen 1, 2; $k_1$, $k_2$ sind immer noch genauso einflusssreich, wie bei jeder anderen Synchronisationsart, aber die übrigen Einflüsse sind so gut wie ausgemerzt.

Von großem Vorteil ist, dass neben der TDOA-Laufzeitmessung jetzt auch TDOA-Phasenmessungen zur Verfügung stehen. Das eröffnet erstmals die Tür zu interessanten kohärenten Auswerteverfahren.

Es wird demnach bevorzugt berechnet:

$$\Delta\varphi_{m,k_1,k_2}(t) = \left(\Delta\varphi_{k_1 \to m}(t) - \Delta\varphi_{k_2 \to m}(t)\right) + \frac{1}{2}\left(\Delta\varphi_{k_2 \to k_1}(t) - \Delta\varphi_{k_1 \to k_2}(t)\right) \qquad (1.4)$$

Dieser Wert $\Delta\varphi_{m,k1,k2}(t)$ stellt den Phasenunterschied der beiden relevanten Pfade dar, ohne von den Phasenlagen der beteiligten Oszillatoren abhängig zu sein. Hierbei <u>kann</u> es je nach Implementierung zu 180 Grad-Phasensprüngen kommen. Ein Phasenrauschen der beteiligten Stationen m, $k_1$, $k_2$ sollte noch gut genug sein, um eine Messung überhaupt durchführen zu können, aber der letztlich verwendete Wert hängt in seiner Genauigkeit nur vom Empfängerrauschen ab. Bessere Oszillatoren werden hier die realisierbaren Integrationszeiten verlängern und auf diesem Umweg eine Genauigkeit der Phasenlagen der beteiligten Oszillatoren $\Delta\varphi_{m,k_1,k_2}(t)$ beeinflussen, aber eine direkte Beeinträchtigung durch das Phasenrauschen ist nicht mehr gegeben.

Das gleiche Prinzip kann vorteilhaft durch einen alternativen Datenfluss mit anderen Berechnungsschritten genutzt werden. Hierzu wird zentral aus den Messungen der Referenz-Stationen 1, 2, ..., 6 der Zeitversatz $\tau_{1 \to 2}$, $\tau_{1 \to 3}$, $\tau_{1 \to 4}$, $\cdots$ $\tau_{2 \to 2}$, $\tau_{2 \to 3}$ $\cdots$ $\tau_{N \to (N-1)}$ mit N als höchster Nummer der Referenz-Stationen bestimmt:

$$\begin{pmatrix} clk_1(t) + \mathrm{T}_0 \\ clk_2(t) + \mathrm{T}_0 \\ \vdots \\ clk_N(t) + \mathrm{T}_0 \end{pmatrix} = A(t) \begin{pmatrix} \tau_{1 \to 2}(t) \\ \tau_{1 \to 3}(t) \\ \vdots \\ \tau_{2 \to 1}(t) \\ \tau_{2 \to 3}(t) \\ \vdots \\ \tau_{N \to (N-1)}(t) \end{pmatrix} \qquad (1.5)$$

Hierdurch werden an zentraler Stelle alle Uhren bzw. Uhrenfehler bis auf ein Offset (deutsch einen Versatz) bestimmt.

Eine dazu erforderliche Matrix A(t) wird so ausgelegt, dass die Werte $d_{k,m}(t)$ im Kern von A(t) wirken und daher keinen Einfluss auf die ermittelten Werte haben. Die verbleibenden Freiheitsgrade von A(t) können dazu genutzt werden, die Fehlerfortpflanzung des Empfängerrauschens zu minimieren.

Eine mögliche Matrix A(t) für den Fall, das alle Messungen vorliegen, wäre:

$$A(t) = \frac{1}{2N} \begin{pmatrix} -1 & \dots & -1 & 1,0 & \dots & 0 & 1 & 0 & \dots & 1 & 0 & \dots \\ 1,0,0 & \dots & 0 & -1,-1 & \dots & -1 & 0,1,0 & & & & & \\ 0,1,0 & \dots & 0 & 0,1,0 & \dots & 0 & 0,0,1 & & & & & \\ & \dots & 0 & & & & & & & & & \end{pmatrix}$$

$(1.6)$

Dadurch nimmt (1.5) folgende Form an:

$$clk_k(t) + T_0 = \frac{1}{2N} \left( \sum_{k' \neq k} \tau_{k' \to k}(t) - \sum_{k' \neq k} \tau_{k \to k'}(t) \right)$$

$(1.7)$

Dabei steht T0 für einen Offset bzw. Versatz zu einem beliebigen Startzeitpunkt der Messung. Der Offset ist für die weiteren Berechnungen nicht relevant, da diese nur die Differenzen zwischen den Stationen benötigen. Diese Daten können dann über Datenfunk, z.B. ZigBee, WLAN (drahtloses lokales Netz) oder GSM (ein Mobilfunkstandard) der einen oder mehreren mobilen Stationen m zur Verfügung gestellt werden. Solche mobilen Stationen m berechnen dann:

$$\tau_{m,k_1,k_2}(t) = \left( \tau_{k_1 \to m}(t) - \tau_{k_2 \to m}(t) \right) + \left( clk_{k_1}(t) - clk_{k_2}(t) \right)$$

$(1.8)$

Betrachtet man den vorherigen Spezialfall, in dem zunächst nur zwei ortsfeste Stationen $k_1$ und $k_2$ ausgewertet werden, so wird A(t) aus (1.6) zu einer 2x2-Matrix und (1.5) wird zu

$$\begin{pmatrix} clk_{k1}(t) + T_0 \\ clk_{k2}(t) + T_0 \end{pmatrix} = \frac{1}{4} \begin{pmatrix} -1 & 1 \\ 1 & -1 \end{pmatrix} \begin{pmatrix} \tau_{k1 \to k2}(t) \\ \tau_{k2 \to k1}(t) \end{pmatrix}$$

$(1.9)$

Für diesen Spezialfall gilt:

$$clk_{k1}(t) - clk_{k2}(t) = \frac{1}{2} \left( \tau_{k2 \to k1}(t) - \tau_{k1 \to k2}(t) \right)$$

$(1.10)$

Dadurch ist die Äquivalenz zwischen (1.8) und (1.2) erkennbar.

Eine derart zentralisierte Berechnung ist ebenso für die Phasen möglich:

$$\begin{pmatrix} \varphi_{LO,1}(t)+\varphi_0 \\ \varphi_{LO,2}(t)+\varphi_0 \\ \vdots \\ \varphi_{LO,N}(t)+\varphi_0 \end{pmatrix} = A(t) \begin{pmatrix} \Delta\varphi_{1->2}(t) \\ \Delta\varphi_{1->3}(t) \\ \vdots \\ \Delta\varphi_{2->1}(t) \\ \Delta\varphi_{2->3}(t) \\ \vdots \\ \Delta\varphi_{N->(N-1)}(t) \end{pmatrix} \qquad (0.1)$$

Es bezeichnet $\varphi_0$ den Phasenoffset zu einem Beobachter. Dabei ist der Phasenoffset für alle Stationen gleich und damit nicht von Bedeutung, da in weiteren Schritten die Differenzen der einzelnen Station verwendet werden.

Bevorzugt werden die Eingangsdaten entlang der Zeitachse einem unwrapping (deutsch:abgewickelte Phase, d.h Phase über 360°, kontinuierlich über die Periode hinaus, dargestellt) zu unterzogen, da Sprünge um 360 Grad durch die nichtganzzahlige Wirkung von A(t) zu Phasensprüngen mit signifikanten Winkeln führen könnten. Alternativ können auch Auswertungen nach (1.4) herangezogen werden, um die Mehrdeutigkeit aufzulösen.

Diese Daten können dann über Datenfunk, z.B. ZigBee, WLAN oder GSM den mobilen Stationen 7; m zur Verfügung gestellt werden. Die mobilen Stationen 7; m berechnen dann:

$$\Delta\varphi_{m,k_1,k_2}(t) = \left(\Delta\varphi_{k_1->m}(t) - \Delta\varphi_{k_2->m}(t)\right) + \left(\varphi_{LO,1}(t) - \varphi_{LO,2}(t)\right) \qquad (1.12)$$

Je nach Ausgestaltung des Systems ist es denkbar, dass sich die Phasen $cp_{k1->m1\ bzw\ k2->m2\ bzw.\ k1->k2\ bzw.\ k2->k1}$ der empfangenen Signale auch während eines Messvorganges ändern. Dann kann diese Auswertung für einzelne zeitliche Abschnitte der ausgetauschten Signale angewandt werden. Dies lässt sich speziell bei FMCW gut mit existierenden Architekturen wie folgt verwirklichen. Vorteilhaft ist bei einer FMCW-basierten Anwendung diese Berechnung auch innerhalb einer Rampe laufend vorzunehmen. Solche Rampen werden von den Referenz-Stationen 1 - 6; k und der empfangenden Station 7; m erzeugt und zumindest von den Referenz-Stationen ausgesendet als die Signale s1, s2; bzw. s3, s4. Dazu wird das im jeweiligen Empfänger gewonnene Beatsignal (deutsch: Zwischenfrequenzsignal) zunächst durch ein Software-Bandpass-Filter gefiltert. Dieses Bandpass-Filter wird im Durchlassbereich auf den durch die Applikation zu erwartenden Frequenzbereich zugeschnitten. Die oben angegebene Addition der Phasen lässt sich dann kontinuierlich durch eine komplexe Multiplikation der entsprechenden Beatsignale erreichen. Die auftretende Halbierung der Phase $\varphi_{k1->m1\ bzw\ k2->m2\ bzw.\ k1->k2\ bzw.\ k2->k1}$ der/des empfangenen Signale $s_{k1->m1\ bzw\ k2->m2\ bzw.\ k1->k2\ bzw.\ k2->k1}$ kann gemäß einem Weg durch eine komplexe Quadrat-Wurzel realisiert werden, wobei jeweils das richtige Vorzeichen zu wählen ist, so dass das resultierende Beatsignal $s_{k1->m1\ bzw\ k2->m2\ bzw.\ k1->k2\ bzw.\ k2->k1}$ der/des Stationen 1-6 u, k und der empfangenden Station 7;m kontinuierlich bleibt. Gemäß einem anderen Weg wird der Gesamtphasenterm verdoppelt, und man erhält:

$$2 \cdot \Delta\varphi_{m,k_1,k_2}(t) = 2 \cdot \left(\Delta\varphi_{k_1->m}(t) - \Delta\varphi_{k_2->m}(t)\right) + \left(\Delta\varphi_{k_2->k_1}(t) - \Delta\varphi_{k_1->k_2}(t)\right) \qquad (1.13)$$

Da durch die komplexe Multiplikation der Beatsignale der Zeitbereich gefaltet wird, entstehen auf diese Weise viele zusätzliche Ziele. Sie sind deutlich schwächer als der durch die line-of-sight (deutsch: Sichtlinie bzw. Sichtverbindung) erzeugte Peak(deutsch: Spitze bzw. Spitzenwert), aber zahlreich. Im Gegenzug wird durch die kontinuierliche Phasenauswertung auch das Phasenrauschen innerhalb einer Messung unterdrückt, so dass die einzelnen Peaks nicht mehr durch das Phasenrauschen der beteiligten Oszillatoren aufgeweitet werden können.

Insbesondere Fig. 2 zeigt einen beispielhaften Ablauf in z.B. einer FMCW-basierten Realisierung. Die Verfahrensschritte laufen dabei optional teilweise parallel oder in geänderter Reihenfolge ab. Skizziert ist außerdem eine Trajektorie 8, d.h. eine örtlich und zeitlich bekannte Bewegungsbahn einer der Referenz-Stationen 4, so dass die Referenz-Station 4 dadurch mittels entsprechender Erweiterung der Berechnung ebenfalls als ortsfest ansehbar ist. Außerdem sind Rechen- und/oder Steuereinheiten 9, 10 skizziert, in welchen Berechnungen zur Durchführung des Verfahrens durchführbar sind. Ein auszugleichender Uhrenoffset 11 ist ebenfalls skizziert.

In einem ersten Verfahrensschritt S1 werden durch ein bekanntes Verfahren, LPR nach US 7,940,743, Cherrysync nach US2009222589, ... alle Stationen, d.h. alle nachfolgend beteiligten Referenz-Stationen k; 1 - 2 - ... N und alle beteiligten empfangenden Stationen /; m vorsynchronisiert.

In einem zweiten Verfahrensschritt S2 senden zu einem vereinbarten Zeitpunkt alle ortsfesten bzw. Referenz-Stationen k; 1 - 2 als das Signal s1, s2 bzw. s3, s4 eine FMCW-Rampe mit einer Steigung von rein beispielsweise 1GHz/1ms im 61GHz Band. Dabei gibt es ein Stationsspezifisches Offset in rein beispielsweise einem 250kHz-Raster. Steigungen können liegen im Bereich von insbesondere 100 MHz in 100 ms bis zu 10 GHz in 100ps, das Band im Bereich von insbesondere 2,4 bis 240 GHz und das Raster im Bereich von insbesondere 5 kHz bis 500 MHz.

In einem dritten Verfahrensschritt S3 führen alle mobilen bzw. empfangenden Stationen 7 mit ihrem Lokaloszillator zu gleicher Zeit ebenfalls eine Rampe mit dieser Steigung aus. Unter gleicher Zeit ist eine Zeit zu verstehen, in der alle Rampen in das Empfangsfenster der übrigen Stationen fallen. Dies ist insbesondere mit einer maximalen Abweichung von einer halben Rampendauer oder geringer erfüllt.

In einem vierten Verfahrensschritt S4 empfangen sowohl die ortsfesten als auch die mobilen Stationen k, m; 1 - 6, 7 die ausgesandten Rampen bzw. Signale s1, s2; s3, s4, s5 und trennen diese in der ZF (ZF:Zwischenfrequenz bzw. Zwischenfrequenzebene) mittels iFDMA.

Die Rampe bzw. das Signal s5 von der mobilen bzw. empfangende Station 7 ist optional. Die empfangende Station 7 muss ihre Rampe nicht senden, sondern kann diese auch nur lokal halten. Es kann aber eine weitere Ausgestaltung sein, wenn die empfangende Station 7 dieses Signal s5 ebenfalls sendet und dadurch die Position auch von den anderen bestimmt werden kann. In diesem Fall wird die empfangende Station vergleichbar zu einer Referenz-Station.

In einem fünften Verfahrensschritt S5 bestimmt jede ortsfeste bzw. Referenz-Station k; 1 - 2 für die eintreffenden Signale aller übrigen ortsfesten bzw. Referenz-Stationen 2 - 1; k' als Messwert den Zeitversatz:

$$\tau_{k'->k}(t) \qquad\qquad (1.14)$$

In einem sechsten Verfahrensschritt S6 veröffentlicht jede Referenz-Station k; 1 - 6 per Datenfunk, z.B. ZigBee, WLAN oder andere Übertragungsstandards diese Werte bzw. Zeitversätze $\tau_{k'->k}(t)$.

In einem siebten Verfahrensschritt S7 hat die mobile bzw. empfangende Station m; 7 ihrerseits die entsprechenden Messwerte $\tau_{k'->m}(t)$ zwischen sich und den jeweiligen Referenz-Stationen k, k'; 1, 2 bestimmt. Die mobile bzw. empfangende Station m; 7 empfängt die Datentelegramme mit den Werten $\tau_{k_1->k_2}(t)$ für alle Paare $k_1, k_2$ aus sendenden der Referenz-Stationen 1 - 6.

In einem achten Verfahrensschritt S8 berechnet die mobile Station $\tau_{m,k_1,k_2}(t)$ für alle Paare $k_1, k_2$ aus sendenden der Referenz-Stationen 1 - 6 und kennt damit TDOA-Werte (TDOA: time difference of arrival, deutsch: Zeitunterschiede der Eintreffzeitpunkte) zwischen den empfangenen Signalen der Referenzstationen 1 - 6, deren Genauigkeit nicht durch die Genauigkeit der Vorsynchronisation und die übrigen diskutierten Faktoren beeinträchtigt ist.

In einem neunten Verfahrensschritt S9 erfolgt optional eine Korrektur eines Uhrenoffsets und/oder eine Ortsbestimmung aus diesen TDOA-Werten in für sich bekannter Weise, z.B. gemäß Bancroft oder Kalman-Filter.

Unter synchronisieren oder Synchronisation werden auch Ausgestaltungen verstanden, die eine "indirekte" Synchronisation beinhalten. D.h. dass beispielsweise nur die Uhrenoffsets mitgeführt werden, ohne z.B. Quarze glattzuziehen.

Die Offenbarung der Anmeldung umfasst folgende (unabhängige bzw. weiterbildende) Aspekte zur Lösung der obigen Aufgabe(n):

1. Aspekt: Wellenbasiertes Verfahren, bei dem zumindest zwei Referenz-Stationen (1, 2) Signale (s1, s2; s3, s4) aussenden,

- wobei die Signale
- nahezu zeitgleich ausgesandt werden (S1, S2),
- im selben Frequenzbereich ausgesandt werden,
- durch ein Multiplexverfahren trennbar sind,
- wobei mindestens eine der Referenz-Stationen (1, 2) neben der Aussendung des eigenen Signals (s1, s2) auch mindestens ein von einer anderen Referenz-Station (2, 1) zeitgleich gesendetes Signal (s2, s1) empfängt und einen zeitlichen Versatz ($\tau$1) und/oder eine Phasenlage zwischen der eigenen Aussendung und dem Empfang hochgenau bestimmt und
- wobei zumindest eine und zumindest empfangende Station (7) die Signale (s3, s4) von mindestens zwei der Referenz-Stationen (1, 2) empfängt.

2. Aspekt: Verfahren nach Aspekt 1, bei dem eine Rechen- und/oder Steuereinheit (9), die nicht Teil einer solchen empfangenden Stationen (7) ist, zumindest eines von den festgestellten Zeitversätzen ($\tau$1, $\tau$2) und Phasenlagen

zu einem Datenstrom (S6) oder Datensatz verarbeitet, welcher der zumindest einen empfangenden Station (7) durch Datenübertragung übertragen wird.

3. Aspekt: Verfahren nach Aspekt 1 oder 2, bei dem durch mindestens eine empfangende Station oder Referenz-Station (1, 2, 7) zumindest eines von dem zeitlichen Versatz ($\tau$1, $\tau$2) und der Phasenlage mindestens eines Signals (s2, s1; s3, s4), das von einer anderen Station einschließlich empfangender Station und Referenz-Stationen (2, 1, 7) empfangenen wird oder wurde, bestimmt wird.

4. Aspekt: Verfahren nach einem vorstehenden Aspekt, bei dem aus empfangenen Signalen (s2, s1; s3, s4) bestimmte Messwerte von mindestens drei verschiedenen empfangenden Stationen (1, 2, 7) so verrechnet werden, dass eine rechnerische Größe entsteht, auf die Systemzeiten dieser Stationen (1, 2, 7) bei linear genäherter Betrachtung keinen Einfluss auf die Laufzeitdifferenzen aus den empfangenen Signalen (1 ,2) haben.

5. Aspekt: Verfahren nach Aspekt 4, bei dem bei genäherter Betrachtung die Taylorreihe n bei quadratischem Glied abgebrochen wird, wobei das Verrechnen insbesondere erfolgt, indem Laufzeiten oder Phasen mit Gewichten addiert und subtrahiert werden und insbesondere die rechnerische Größe Weglängen und Weglängenunterschiede sind.

6. Aspekt: Verfahren nach einem vorstehenden Aspekt, bei dem aus empfangenen Signalen (s2, s1; s3, s4) bestimmte / die Messwerte von mindestens drei verschiedenen empfangenden Stationen (1, 2, 7) verrechnet werden gemäß:

$$\tau_{m,k_1,k_2}(t) = \left(\tau_{k_1 \to m}(t) - \tau_{k_2 \to m}(t)\right) + \frac{1}{2}\left(\tau_{k_2 \to k_1}(t) - \tau_{k_1 \to k_2}(t)\right) \tag{1.2}$$

7. Aspekt: Verfahren nach einem vorstehenden Aspekt, bei dem bei einem Einsatz von mehr als drei Stationen (1, 2, 3, 7) aus empfangenen Signalen (s2, s1; s3, s4) bestimmte / die Messwerte von mindestens drei verschiedenen empfangenden Stationen (1, 2, 7) verrechnet werden gemäß:

$$\begin{pmatrix} clk_1(t) + T_0 \\ clk_2(t) + T_0 \\ \vdots \\ clk_N(t) + T_0 \end{pmatrix} = A(t) \begin{pmatrix} \tau_{1 \to 2}(t) \\ \tau_{1 \to 3}(t) \\ \vdots \\ \tau_{2 \to 1}(t) \\ \tau_{2 \to 3}(t) \\ \vdots \\ \tau_{N \to (N-1)}(t) \end{pmatrix}, \tag{1.5}$$

insbesondere gemäß:

$$clk_k(t) + T_0 = \frac{1}{2N}\left(\sum_{k' \neq k} \tau_{k' \to k}(t) - \sum_{k' \neq k} \tau_{k \to k'}(t)\right) \tag{1.7}$$

8. Aspekt: Verfahren nach einem vorstehenden Aspekt, bei dem ein Uhrenoffset der empfangenden Station (7) relativ zu zumindest einer der Referenz-Stationen (1, 2) bestimmt wird.

9. Aspekt: Verfahren nach einem vorstehenden Aspekt, bei dem als die gesendeten Signale (s1, s2; s3, s4) FMCW- oder FSCW-Signale verwendet oder gebildet werden.

10. Aspekt: Verfahren nach einem vorstehenden Aspekt, bei dem IFMDA oder CDMA als das Multiplexverfahren angewendet wird.

11. Aspekt: Verfahren nach einem vorstehenden Aspekt, bei dem abhängig von den festgestellten Zeitversätzen ($\tau$1) und/oder Phasenlagen zukünftige Aussendungen der Referenz-Stationen (1, 2) gesteuert werden.

12. Aspekt: Verfahren nach einem vorstehenden Aspekt, bei dem ein zeitgleiches oder nahezu zeitgleiches Aussenden als ein zeitlich überlappender Sendebetrieb oder Sendebetrieb zwischen zwei Aussendungen einer Station mit einer Ruhezeit kleiner als einer Dauer der Kanalimpulsantwort durchgeführt wird.

13. Aspekt: Wellenbasiertes System mit

- zumindest zwei Referenz-Stationen (1, 2), die Signale (s1, s2; s3, s4) aussenden und die jeweils zumindest eine Rechen- und/oder Steuereinheit (9) aufweisen, und
- zumindest einer und zumindest empfangenden Station (7), die Signale (s3, s4) von mindestens zwei der Referenz-Stationen (1, 2) empfängt und die zumindest eine Rechen- und/oder Steuereinheit (10) aufweist,
- wobei die Rechen- und/oder Steuereinheiten (9, 10) ausgebildet oder eingerichtet sind, jeweils zumindest einen Teil von Verfahrensschritten des Verfahrens nach einem vorstehenden Aspekt durchzuführen und in Gesamtheit das gesamte Verfahren durchführen.

14. Aspekt: Referenz-Station (1, 2) oder empfangende Station (7), die ausgebildet oder eingerichtet ist als Komponente eines Systems nach Aspekt 13 oder die ausgebildet oder eingerichtet ist zum Durchführen eines Verfahrens nach einem der Aspekte bis 12.

15. Aspekt: Empfangende Station (7) nach einem vorstehenden Aspekt, die eine mobile Station mit einer Bewegungsbahn (8) ist, wobei die Bewegungsbahn insbesondere nicht festgelegt ist.

16. Aspekt: Referenz-Station (1, 2) nach einem vorstehenden Aspekt mit einer/der Rechen- und/oder Steuereinheit (9), die abhängig von den festgestellten Zeitversätzen ($\tau$1) und/oder Phasenlagen zukünftige Aussendungen der Referenz-Stationen (1, 2) Einfluss steuert.

Bezugszeichenliste:

1 - 6 Referenz-Stationen
7 empfangende Station, insbesondere mobile Station
8 Trajektorie
9 Rechen- und/oder Steuereinheit
10 Rechen- und/oder Steuereinheit
11 Uhrenoffset

$clk_k(t)$ Abstand im Funkkanal zwischen den Stationen k und m s1 - s4 Signale
s5 optionales Signal von der empfangenden Station S1 - S9 Verfahrensschritte
t Zeit
$\tau_{m,k1,k2}(t)$ Abstandsunterschied der mobilen zu beiden ortsfesten Stationen
$\tau_{k\rightarrow m}$ Zeitversatz zwischen Stationen k und m $\varphi_{k\rightarrow m}$ Phase zwischen Stationen k und m
$\Delta_{\varphi k\rightarrow m}$ Phasendifferenz zwischen Stationen k und m $\Delta\varphi_{m,k1,k2}(t)$ Phasenunterschied der relevanten Pfade

**Patentansprüche**

1.  Verfahren, bei dem zumindest zwei Referenz-Stationen (1, 2) Signale (s1, s2; s3, s4) aussenden,

    - wobei die Signale

        - etwa zeitgleich ausgesandt werden (S1, S2),
        - im selben Frequenzbereich ausgesandt werden,
        - durch ein Multiplexverfahren trennbar sind,

- wobei mindestens eine der Referenz-Stationen (1, 2) neben der Aussendung des eigenen Signals (s1, s2) auch mindestens ein von einer anderen Referenz-Station (2, 1) zeitgleich gesendetes Signal (s2, s1) empfängt und einen zeitlichen Versatz ($\tau$1) und/oder eine Phasenlage zwischen der eigenen Aussendung und dem Empfang hochgenau bestimmt und

- wobei zumindest eine und zumindest empfangende Station (7) die Signale (s3, s4) von mindestens zwei der Referenz-Stationen (1, 2) empfängt

- wobei abhängig von den festgestellten Zeitversätzen ($\tau$1) und/oder Phasenlagen zukünftige Aussendungen der Referenz-Stationen (1, 2) gesteuert werden.

2. Verfahren nach Anspruch 1, bei dem eine Rechen- und/oder Steuereinheit (9), die nicht Teil einer solchen empfangenden Stationen (7) ist, zumindest eines von den festgestellten Zeitversätzen ($\tau$1, $\tau$2) und Phasenlagen zu einem Datenstrom (S6) oder Datensatz verarbeitet, welcher der zumindest einen empfangenden Station (7) durch Datenübertragung übertragen wird.

3. Verfahren nach Anspruch 1 oder 2, bei dem durch mindestens eine empfangende Station oder Referenz-Station (1, 2, 7) zumindest eines von dem zeitlichen Versatz ($\tau$1, $\tau$2) und der Phasenlage mindestens eines Signals (s2, s1; s3, s4), das von einer anderen Station einschließlich empfangender Station und Referenz-Stationen (2, 1, 7) empfangenen wird oder wurde, bestimmt wird.

4. Verfahren nach einem vorstehenden Anspruch, bei dem aus empfangenen Signalen (s2, s1; s3, s4) bestimmte Messwerte von mindestens drei verschiedenen empfangenden Stationen (1, 2, 7) so verrechnet werden, dass eine rechnerische Größe entsteht, auf die Systemzeiten dieser Stationen (1, 2, 7) bei linear genäherter Betrachtung keinen Einfluss auf die Laufzeitdifferenzen aus den empfangenen Signalen (1, 2) haben.

5. Verfahren nach Anspruch 4, bei dem bei genäherter Betrachtung die Taylorreihe n bei quadratischem Glied abgebrochen wird, wobei das Verrechnen insbesondere erfolgt, indem Laufzeiten oder Phasen mit Gewichten addiert und subtrahiert werden und insbesondere die rechnerische Größe Weglängen und Weglängenunterschiede sind.

6. Verfahren nach einem vorstehenden Anspruch, bei dem aus empfangenen Signalen (s2, s1; s3, s4) bestimmte / die Messwerte von mindestens drei verschiedenen empfangenden Stationen (1, 2, 7) verrechnet werden gemäß:

$$\tau_{m,k_1,k_2}(t) = \left(\tau_{k_1 \to m}(t) - \tau_{k_2 \to m}(t)\right) + \frac{1}{2}\left(\tau_{k_2 \to k_1}(t) - \tau_{k_1 \to k_2}(t)\right) \tag{1.2}$$

7. Verfahren nach einem vorstehenden Anspruch, bei dem bei einem Einsatz von mehr als drei Stationen (1, 2, 3, 7) aus empfangenen Signalen (s2, s1; s3, s4) bestimmte / die Messwerte von mindestens drei verschiedenen empfangenden Stationen (1, 2, 7) verrechnet werden gemäß:

$$\begin{pmatrix} clk_1(t) + T_0 \\ clk_2(t) + T_0 \\ \vdots \\ clk_N(t) + T_0 \end{pmatrix} = A(t) \begin{pmatrix} \tau_{1 \to 2}(t) \\ \tau_{1 \to 3}(t) \\ \vdots \\ \tau_{2 \to 1}(t) \\ \tau_{2 \to 3}(t) \\ \vdots \\ \tau_{N \to (N-1)}(t) \end{pmatrix} \tag{1.5}$$

insbesondere gemäß:

$$clk_k(t) + T_0 = \frac{1}{2N}\left(\sum_{k' \neq k} \tau_{k' \to k}(t) - \sum_{k' \neq k} \tau_{k \to k'}(t)\right) \tag{1.7}$$

8. Verfahren nach einem vorstehenden Anspruch, bei dem ein Uhrenoffset der empfangenden Station (7) relativ zu zumindest einer der Referenz-Stationen (1, 2) bestimmt wird.

9. Verfahren nach einem vorstehenden Anspruch, bei dem als die gesendeten Signale (s1, s2; s3, s4) FMCW- oder FSCW-Signale verwendet oder gebildet werden.

10. Verfahren nach einem vorstehenden Anspruch, bei dem IFMDA oder CDMA als das Multiplexverfahren angewendet wird.

11. Verfahren nach einem vorstehenden Anspruch, bei dem ein zeitgleiches oder etwa zeitgleiches Aussenden als ein zeitlich überlappender Sendebetrieb oder Sendebetrieb zwischen zwei Aussendungen einer Station mit einer Ruhezeit kleiner als einer Dauer der Kanalimpulsantwort durchgeführt wird.

12. System mit

   - zumindest zwei Referenz-Stationen (1, 2), die Signale (s1, s2; s3, s4) aussenden und die jeweils zumindest eine Rechen- und/oder Steuereinheit (9) aufweisen, und
   - zumindest einer und zumindest empfangenden Station (7), die Signale (s3, s4) von mindestens zwei der Referenz-Stationen (1, 2) empfängt und die zumindest eine Rechen- und/oder Steuereinheit (10) aufweist,
   - wobei die Rechen- und/oder Steuereinheiten (9, 10) ausgebildet oder eingerichtet sind, jeweils zumindest einen Teil von Verfahrensschritten des Verfahrens nach einem vorstehenden Anspruch durchzuführen und in Gesamtheit das gesamte Verfahren durchführen.

13. Referenz-Station (1, 2) zum Durchführen eines Verfahrens nach einem der Ansprüche 1 bis 12, wobei die Referenz-Station (1, 2) neben der Aussendung des eigenen Signals (s1, s2) auch mindestens ein von einer anderen Referenz-Station (2, 1) zeitgleich gesendete Signal (s2, s1) empfängt und einen zeitlichen Versatz ($\tau$1) und/oder eine Phasenlage zwischen der eigenen Aussendung und dem Empfang hochgenau bestimmt, wobei die Referenz-Station (1, 2) ferner eine Rechen- und/oder Steuereinheit (9) aufweist, die abhängig von den festgestellten Zeitversätzen ($\tau$1) und/oder Phasenlagen zukünftige Aussendungen der Referenz-Stationen (1, 2) steuert.

Fig. 1

Fig. 2

**Europäisches Patentamt**
**European Patent Office**
**Office européen des brevets**

# EUROPÄISCHER RECHERCHENBERICHT

Nummer der Anmeldung

EP 21 18 9562

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 653 886 A1 (CHOI OK JAE [KR]) 23. Oktober 2013 (2013-10-23) * Absatz [0026] - Absatz [0051]; Abbildungen 3,4 * ----- | 1-13 | INV. G01S1/02 G01S1/20 G01S5/02 G01S5/10 |
| A | US 2012/252503 A1 (WU RYAN HAOYUN [US]) 4. Oktober 2012 (2012-10-04) * Absatz [0044] - Absatz [0063]; Abbildungen 2-4 * ----- | 1-13 | |
| A | ROEHR SVEN ET AL: "Wireless local positioning - existing solutions and novel system concepts", 2015 IEEE MTT-S INTERNATIONAL CONFERENCE ON MICROWAVES FOR INTELLIGENT MOBILITY (ICMIM), IEEE, 27. April 2015 (2015-04-27), Seiten 1-4, XP032783381, DOI: 10.1109/ICMIM.2015.7117941 * Absatz [II.C] * ----- | 1-13 | |
| A | SVEN ROEHR ET AL: "Method for High Precision Radar Distance Measurement and Synchronization of Wireless Units", MICROWAVE SYMPOSIUM, 2007. IEEE/MTT-S INTERNATIONAL, IEEE, PI, 1. Juni 2007 (2007-06-01), Seiten 1315-1318, XP031112177, ISBN: 978-1-4244-0687-6 * Absatz [0II.] * ----- | 1-13 | **RECHERCHIERTE SACHGEBIETE (IPC)** G01S |

Der vorliegende Recherchenbericht wurde für alle Patentansprüche erstellt

| Recherchenort | Abschlußdatum der Recherche | Prüfer |
|---|---|---|
| München | 4. November 2021 | Horbach, Christian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 18 9562

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-11-2021

| Im Recherchenbericht angeführtes Patentdokument | Datum der Veröffentlichung | Mitglied(er) der Patentfamilie | Datum der Veröffentlichung |
|---|---|---|---|
| EP 2653886 A1 | 23-10-2013 | CN 103261911 A<br>EP 2653886 A1<br>US 2013337835 A1<br>WO 2012081740 A1 | 21-08-2013<br>23-10-2013<br>19-12-2013<br>21-06-2012 |
| US 2012252503 A1 | 04-10-2012 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7940743 B

- US 2009222589 A

**In der Beschreibung aufgeführte Nicht-Patentliteratur**

- **S. ROEHR ; M. VOSSIEK ; P. GULDEN.** Method for High Precision Radar Distance Measurement and Synchronization of Wireless Units. *2007 IEEE MTT-S International Microwave Symposium,* Juni 2007, 1315-1318